# FASCICULE DE BREVET EUROPEEN

(11) **EP 3 443 604 B1**
(45) Date de publication et mention de la délivrance du brevet: **14.12.2022**
(21) Numéro de dépôt: 17719206.9
(22) Date de dépôt: 13.04.2017
(51) Int. Cl.: H01M 10/653, H01M 10/655, B33Y 10/00, B29C 67/00, H01M 50/24, B29C 64/106, B29C 70/84, B33Y 30/00, H01M 50/213, B33Y 80/00

(54) **ASSEMBLAGE D'ELEMENTS ELECTROCHIMIQUES PAR UN PROCEDE DE FABRICATION ADDITIVE**
ELEKTROCHEMISCHE ELEMENTE, DIE BEI GENERATIVES FERTIGUNGSVERFAHREN ZUSAMMENGESETZT WERDEN
ELECTROCHEMICAL ELEMENTS ASSEMBLED BY AN ADDITIVE MANUFACTURING METHOD

(30) Priorité: 14.04.2016 FR 1653315
(43) Date de publication de la demande: 20.02.2019
(73) Titulaire: SAFT, 92300 Levallois-Perret (FR)
(72) Inventeur: NARBONNE, Alexandre, 33290 Blanquefort (FR)
(74) Mandataire: Hirsch & Associés
(86) Numéro de dépôt international: PCT/EP2017/059031
(87) Numéro de publication internationale: WO 2017/178634

(56) Documents cités:
- EP-A1- 2 228 851
- EP-A1- 2 650 945
- EP-A1- 2 994 952
- EP-A1- 3 133 670
- FR-A1- 2 962 261
- US-A1- 2013 108 908
- US-A1- 2015 155 534

## Description

### DOMAINE TECHNIQUE

L'invention se rapport au domaine technique des procédés de fabrication d'un d'assemblage d'éléments électrochimiques.

### ETAT DE LA TECHNIQUE

Une batterie comprend généralement une pluralité d'éléments électrochimiques (encore appelées « éléments » dans ce qui suit), disposés côte à côte dans un coffre commun. Ils doivent être maintenus ensemble en un seul bloc afin qu'ils ne puissent pas bouger une fois montés dans le coffre. En effet, en cas de vibrations ou de chocs et en l'absence de maintien, les éléments se déplaceraient dans le coffre de manière aléatoire. Ces déplacements pourraient provoquer des dégradations ou des ruptures des composants de la batterie, voire des éléments eux-mêmes.

Plusieurs techniques existent pour assembler des éléments.

Une première technique consiste à utiliser des moyens de liaison mécaniques en plastique et/ou en métal entre les éléments. Ces moyens de liaison sont généralement préfabriqués via des procédés courants de fabrication tels que l'usinage, l'injection et l'emboutissage. Ils sont ensuite assemblés aux éléments par vissage, clipsage, collage ou tout autre mode d'assemblage.

Le document EP 2 200 110 décrit par exemple un système de maintien d'éléments électrochimiques, ledit système comprenant :
- un premier flasque muni d'ouvertures traversantes ;
- une pluralité de coupelles, chaque coupelle étant placée sur le couvercle d'un élément et est reçue dans une des ouvertures traversantes du premier flasque ;
- un deuxième flasque muni d'ouvertures traversantes ;
- une pluralité de bagues placées sur le fond des éléments et disposées dans les ouvertures traversantes du deuxième flasque.

Cette méthode impose néanmoins de préfabriquer les pièces de structure, d'investir dans des outils de fabrication, de stocker les pièces et elle limite les géométries possibles aux modes d'obtention retenus. Par ailleurs, une fois que les dimensions des pièces sont établies, il est difficile de changer la géométrie de la batterie.

Une deuxième méthode consiste à surmouler les éléments en un bloc en les noyant plus ou moins dans une matière liquide qui durcit par la suite. Cette matière est généralement une résine thermodurcissable massive ou moussante. Le document EP 2 403 050 décrit une telle méthode. Néanmoins, cette méthode présente les inconvénients suivants :
- elle impose de recourir à un outillage de surmoulage.
- des fuites de résine sont parfois observées et sont difficiles à contrôler.
- des poches d'air pouvant atteindre plusieurs centimètres de diamètres peuvent se former. Ces poches peuvent entrainer une mauvaise protection thermique des éléments. De plus, elles sont difficilement détectables.
- couler dans un coffre un volume important de résine (supérieur à 5 litres) impose d'utiliser une résine à long temps de prise, ce qui grève la productivité.

Enfin, le principe même de la coulée interdit de créer dans le matériau coulé des géométries complexes utiles aux performances de la batterie. <insérer page 2a>

Par conséquent, on recherche une nouvelle technique d'assemblage d'éléments électrochimiques permettant de pallier au moins un des inconvénients liés aux procédés de l'art antérieur.

### RESUME DE L'INVENTION

A cet effet, l'invention propose un procédé permettant de réaliser un assemblage d'au moins deux éléments électrochimiques, en utilisant une technique de fabrication additive. On entend par «fabrication additive », encore synonyme « d'impression 3D », une technique consistant à mettre en forme une pièce par ajout de matière et/ou par empilement de couches successives, par opposition à la mise en forme par enlèvement de matière, tel que l'usinage.

Une première couche d'un cordon de matériau de structure est déposée au contact d'un des éléments. On attend sa solidification totale ou partielle (ou sa cohésion dans le cas d'un matériau de structure sous forme d'une poudre). Puis, une deuxième couche d'un cordon de matériau de structure est déposée en prenant appui sur la première couche de cordon et/ou sur un des éléments. On attend la solidification totale ou partielle du deuxième cordon. Les étapes de dépôt d'une couche de cordon et de solidification (ou de cohésion) sont répétées alternativement autant de fois que nécessaire, jusqu'à obtenir une hauteur suffisante de cordons. L'empilement des cordons dans le sens de l'axe longitudinal du conteneur permet ainsi de construire une cloison assurant le maintien des éléments.

Le terme « assemblage » utilisé dans ce qui suit désigne le produit obtenu par l'action d'assembler plusieurs pièces.

US 2013/108908 A1 décrit un assemblage d'une pluralité d'éléments électrochimiques dans lequel les éléments électrochimiques comprennent un conteneur présentant une paroi, ledit assemblage étant caractérisé en ce qu'au moins une portion de la paroi d'au moins un des conteneurs est en contact avec une cloison qui est une pièce monolithique isolante disposée entre les éléments électrochimiques.

EP 2 650 945 A1 décrit un assemblage d'une pluralité d'éléments électrochimiques dans lequel les éléments électrochimiques comprennent un conteneur présentant une paroi, ledit assemblage étant caractérisé en ce qu'au moins une portion de la paroi d'au moins un des conteneurs est en contact avec une cloison, qui est partie intégrante du bloc dans lequel les éléments électrochimiques sont disposés. Le bloc comprend un passage pour refroidir les éléments électrochimiques.

US 2015/155534 A1 décrit un assemblage d'une pluralité d'éléments électrochimiques dans lequel les éléments électrochimiques comprennent un conteneur présentant une paroi, ledit assemblage étant caractérisé en ce que les éléments électrochimiques sont placés successivement dans deux containers, qui sont des "topologically interlocking materials" (TIMs) obtenus par une technique de fabrication additive.

EP 2 994 952 A1 décrit un élément électrochimique réalisé par impression 3D, en déposant successivement les matériaux actifs couche par couche sur des collecteurs de courant.

EP 2 228 851 A1 décrit un assemblage d'une pluralité d'éléments électrochimiques dans lequel les éléments électrochimiques comprennent un conteneur présentant une paroi, ledit assemblage étant caractérisé en ce qu'au moins une portion de la paroi d'au moins un des conteneurs est en contact avec une cloison qui est partie intégrante du bloc dans lequel les éléments électrochimiques sont disposés. Le bloc comprend des passages pour refroidir les éléments électrochimiques.

EP 3 133 670 A1 décrit un assemblage d'une pluralité d'éléments électrochimiques dans lequel les éléments électrochimiques sont assemblés par compression par l'utilisation de plaques de compression en matériau thermoplastique et fabriquées par une technique de fabrication additive. Les plaques de compression sont disposées aux extrémités de l'assemblage.

Un **premier** objet de l'invention consiste donc en l'utilisation d'une technique de fabrication additive pour assembler une pluralité d'éléments électrochimiques, la technique de fabrication additive servant à la création de cloisons entre deux éléments contigus de la pluralité d'éléments électrochimiques.

Un **second** objet de l'invention consiste en un procédé de fabrication d'un assemblage d'une pluralité d'éléments électrochimiques, les éléments électrochimiques comprenant chacun un conteneur présentant une paroi, ledit procédé comprenant les étapes de :
a) mise à disposition d'une pluralité d'éléments électrochimiques et;
b) assemblage de la pluralité d'éléments électrochimiques par une technique de fabrication additive comprenant les étapes de :
   i) dépôt d'un cordon Ci d'au moins un matériau au contact d'au moins une portion de la paroi d'un des conteneurs ;
   ii) solidification totale ou partielle du matériau ;
   iii) dépôt d'un cordon Ci+1 d'un matériau soit sur au moins une portion du cordon Ci préalablement déposé, soit sur un élément électrochimique, le matériau du cordon Ci+1 pouvant être identique ou différent du matériau du cordon Ci,
   iv) répétition des étapes i) à iii) jusqu'à ce que la superposition des cordons conduise à la formation de cloisons assurant l'assemblage des éléments électrochimiques.

Un **troisième** objet de l'invention consiste en un procédé de fabrication d'un assemblage d'une pluralité d'éléments électrochimiques de format prismatique ou de type pochette, les éléments électrochimiques comprenant chacun un conteneur présentant une paroi, ledit procédé utilisant une technique de fabrication additive pour assembler la pluralité d'éléments électrochimiques, ledit procédé comprenant les étapes de:
a) mise à disposition d'un élément électrochimique Ei ;
b) dépôt d'au moins un cordon Ci d'au moins un matériau au contact d'au moins une portion de la paroi du conteneur de l'élément électrochimique Ei ;
c) solidification totale ou partielle du matériau du cordon Ci ;
d) superposition d'un élément électrochimique Ei+1 sur l'élément électrochimique Ei ;
e) dépôt d'au moins un cordon Ci+1 d'au moins un matériau au contact d'au moins une portion de la paroi du conteneur de l'élément électrochimique Ei+1, le matériau du cordon Ci+1 pouvant être identique ou différent du matériau du cordon Ci ;
f) solidification totale ou partielle du matériau du cordon Ci+1 ;
g) répétition des étapes d) à f).

Le second et le troisième objet de l'invention peuvent présenter une ou plusieurs caractéristiques suivantes :
Le cordon Ci de l'étape b) peut être constitué d'un matériau thermoplastique déposé sous forme d'un liquide visqueux ou d'un gel. Il peut aussi être constitué d'un matériau thermodurcissable, dont la solidification à l'étape c) est provoquée par une réaction de polymérisation de monomères en présence d'un agent de réticulation.

Les procédés, second et troisième objets de l'invention, peuvent comprendre en outre entre les étapes c) et d), une étape de moussage du matériau du cordon Ci.

Chaque cordon peut avoir une épaisseur, mesurée dans la direction de l'axe longitudinal du conteneur, variant de 0,1 à 10 mm.

Un même cordon Ci peut comprendre au moins deux matériaux de natures différentes.

Deux cordons peuvent présenter des épaisseurs différentes.

Le tracé du dépôt d'un cordon Ci peut être réalisé :
a) soit en déplaçant un appareil destiné à déposer le cordon et en maintenant la pluralité d'éléments électrochimiques dans une position fixe,
b) soit en déplaçant la pluralité d'éléments électrochimiques et en maintenant fixe l'appareil destiné à déposer le cordon.

Le tracé du dépôt du cordon Ci peut s'effectuer soit dans un plan, soit dans les trois directions de l'espace et le cordon Ci est en contact avec des éléments électrochimiques et/ou le cordon Ci-1.

Un **quatrième** objet de l'invention est un assemblage d'une pluralité d'éléments électrochimiques dans lequel les éléments électrochimiques comprennent un conteneur présentant une paroi, ledit assemblage étant caractérisé en ce qu'au moins une portion de la paroi d'au moins un des conteneurs est en contact avec une cloison obtenue par une technique de fabrication additive et constituée de la superposition d'une pluralité de cordons d'un matériau de structure, c'est-à-dire au moins deux cordons d'un matériau de structure, la cloison étant située entre deux éléments électrochimiques contigus.

L'assemblage peut présenter une ou plusieurs des caractéristiques suivantes :
Le cordon Ci peut être déposé selon une première direction principale, et le cordon Ci+1 est superposé sur le cordon Ci et est déposé selon une seconde direction principale.

La variation angulaire de la direction principale de dépose de deux cordons contigus Ci et Ci+1 peut être prédéterminée.

L'assemblage peut comprendre au moins deux rangées d'éléments électrochimiques alignés et un espace vide peut exister entre deux rangées, cet espace vide constituant un canal pour une circulation naturelle ou forcée d'un fluide.

L'assemblage peut comprendre au moins deux canaux pour la circulation naturelle ou forcée d'un fluide.

L'assemblage peut comprendre au moins trois rangées d'éléments électrochimiques et au moins un cordon délimite un canal non rectiligne s'étendant selon deux ou trois dimensions de l'espace, pour la circulation du fluide. L'une des extrémités du canal peut servir d'entrée pour la circulation du fluide et l'autre extrémité servir de sortie pour la circulation du fluide.

La circulation du fluide dans l'espace situé entre les cordons Ci et Ci+n avec n ≥ 1 peut s'effectuer à contre-courant de la circulation du fluide situé dans l'espace situé entre les cordons Ci et Ci-p avec p ≥ 1.

L'assemblage peut comprendre des moyens pour améliorer les échanges thermiques, ces moyens étant par exemple choisis dans le groupe consistant en des plénums, des diffuseurs, des plaques séparatrices, des échangeurs de chaleur, des caloducs et des pièces de structure. Ces moyens peuvent être noyés au moins partiellement dans un matériau également utilisé pour réaliser un cordon.

Au moins un espace situé entre des éléments contigus peut être complètement rempli d'un seul dépôt d'un matériau de structure.

Le matériau au contact des éléments électrochimiques situés à la périphérie de l'assemblage peut posséder une masse volumique différente, par exemple supérieure, à celle du matériau au contact des éléments ne se trouvant pas à la périphérie de l'assemblage.

L'assemblage peut comprendre une ou plusieurs pièces d'aspect, et/ou un ou plusieurs capteurs.

Les espaces situés entre des éléments électrochimiques contigus peuvent être dépourvus de cordon de matériau et communiquer entre eux, ces espaces s'étendant selon une, deux ou trois directions de l'espace.

### DESCRIPTION DES FIGURES

La figure 1 représente dans un ordre chronologique, différentes vues en coupe d'un assemblage d'éléments électrochimiques à différentes étapes du procédé de fabrication.
La figure 2a est une représentation schématique d'un outil de fabrication additive, muni d'une buse déposant au contact du conteneur des éléments électrochimiques un cordon d'un matériau de structure susceptible de se solidifier ou de se consolider.
La figure 2b est une représentation schématique de l'étape de dépose d'un cordon de matériau de structure au contact du conteneur des éléments électrochimiques. Une buse fixe délivre le matériau de structure. Les éléments électrochimiques sont disposés sur un support mobile dont le déplacement est dirigé par un robot.
Les figures 3a à 3c représentent chacune le tracé d'un cordon de matériau de structure selon une direction principale. La figure 3d représente l'empilement des trois couches de cordon des figures 3a à 3c.
La figure 4a représente une disposition permettant d'obtenir deux canaux de circulation d'air dans quatre rangées d'éléments. Les canaux sont matérialisés par les deux espaces situées entre deux rangées d'éléments.
La figure 4b représente un mode de réalisation dans lequel un cordon d'un matériau de structure est déposé selon une direction principale de 90° par rapport à l'horizontale.
La figure 4c représente quatre rangées d'éléments. Un canal est matérialisé par l'espace situé entre deux rangées d'élément.
La figure 4d représente une superposition des trois couches de cordon des figures 4a à 4c.
La figure 5a et la figure 5b représentent chacune une vue d'un assemblage d'éléments dans lequel une cloison constituée d'un cordon de matériau de structure a été disposée afin de créer un canal de circulation d'air. L'assemblage est pourvu de parois fabriquées par le procédé de fabrication additive. Il est également pourvu de plaques séparatrices.
La figure 5c représente la superposition de trois couches de cordons, un premier cordon disposé selon l'arrangement de la figure 5a vient s'intercaler entre deux couches de cordons disposées selon l'arrangement de la figure 5b. Une ventilation forcée est placée à l'entrée et à la sortie de canaux de circulation d'air.
La figure 6 représente un assemblage d'éléments dans lequel un espace situé entre des éléments contigus est rempli d'un matériau de structure déposé en une seule fois.
La figure 7 représente un assemblage d'éléments de format parallélépipédique de faible épaisseur dans lequel des cordons de matériau de structure ont été déposés de façon concomitante avec le dépôt des éléments.
La figure 8 représente une vue d'un assemblage d'éléments de format parallélépipédique de faible épaisseur. Un ventilateur assure une convection d'air forcée.

### DESCRIPTION DE MODES DE REALISATION

La technique de fabrication additive consiste à déposer couche par couche un matériau qui après solidification ou cohésion, produit une structure qui maintient ensemble les éléments électrochimiques. Une buse délivrant un matériau de structure, se déplace dans les trois directions de l'espace. Son déplacement est piloté par un logiciel de conception assistée par ordinateur (CAO). Un ordinateur utilise un fichier numérique contenant les coordonnées dans les trois directions de l'espace des emplacements où le matériau de structure doit être déposé.

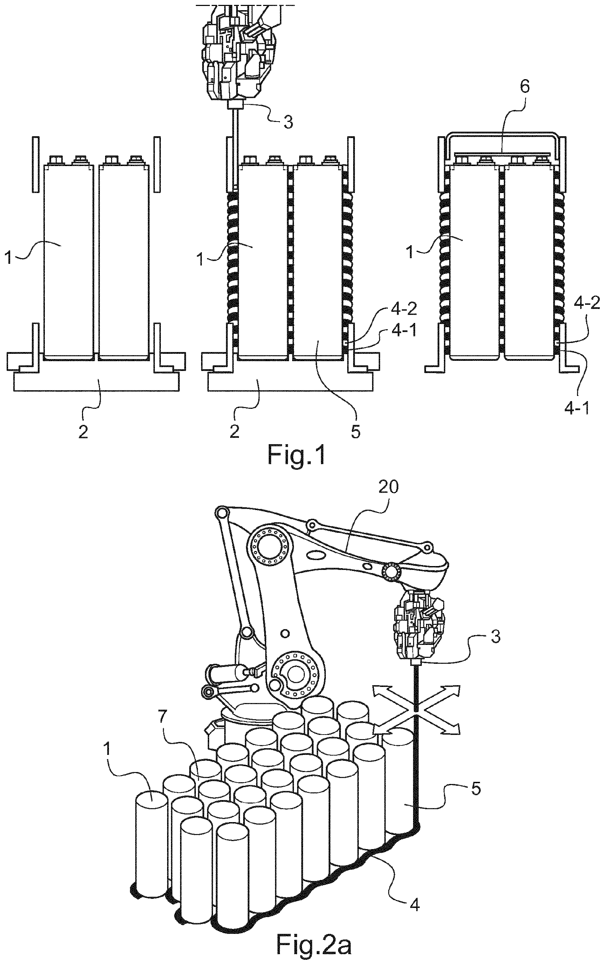

La figure 1 illustre le principe de la technique de fabrication additive appliqué à un assemblage de deux éléments. Les étapes sont représentées chronologiquement de gauche à droite. Deux éléments (1) sont disposés côte à côte sur un support (2). Le rôle du support est de maintenir chaque élément à une position fixe prédéterminée. Une buse (3) dirigée par un robot (20) délivre un premier cordon (4-1) d'un matériau de structure sur le support et au contact du conteneur (5) des deux éléments. Ce matériau peut se trouver soit sous forme d'un liquide visqueux ou d'un gel, soit sous la forme d'une poudre. Après solidification du matériau du cordon (ou après sa cohésion, s'il s'agit d'un matériau sous forme de poudre), la buse dépose au-dessus du premier cordon, un second cordon (4-2) de matériau qui se solidifie à son tour. Les cordons sont empilés les uns sur les autres jusqu'à ce que l'empilement atteigne une certaine hauteur. Une cloison est ainsi formée qui maintient solidaires les deux éléments. Les éléments assemblés peuvent ensuite être retirés de leur support.

L'assemblage obtenu par le procédé selon l'invention se distingue aisément d'un assemblage obtenu par coulée d'une mousse en raison de l'aspect caractéristique de la surface du matériau de structure après sa solidification. En effet, la cloison obtenue présente une série d'ondulations issues du dépôt de cordons successifs. Ces ondulations sont absentes d'un procédé d'assemblage par coulée d'une résine en une seule fois.

Dans l'exemple illustré à la figure 1, le déplacement de la buse s'effectue dans un plan horizontal et les couches obtenues sont horizontales. Elles sont généralement déposées parallèlement les unes aux autres, la direction d'empilement étant de préférence parallèle à l'axe longitudinal du conteneur des éléments. Néanmoins, l'invention ne se limite pas au dépôt de couches horizontales. En effet, le déplacement de la buse peut aussi s'effectuer selon une direction verticale. En associant un déplacement de la buse simultanément dans le plan horizontal et dans la direction verticale, on peut obtenir un cordon de forme hélicoïdale.

Le procédé selon l'invention permet de solidariser automatiquement les éléments les uns aux autres durant l'empilement des cordons, entrainant ainsi la formation d'une structure massive (ou d'une matrice). Il n'est donc plus nécessaire de prévoir des moyens de liaison mécanique additionnels entre les éléments d'une même batterie, puisque la fonction de maintien mécanique est à présent obtenue par solidification du matériau de cordon (ou sa consolidation dans le cas du frittage d'une poudre).

Des pièces (6) peuvent être ajoutées à l'assemblage. Il peut s'agir de capots, de couvercles, de brides, et de support d'accessoires divers. Ces pièces peuvent avoir été fabriquées au préalable puis fixées à l'assemblage. Elles peuvent également être fabriquées sur l'assemblage par la technique de fabrication additive.

Le procédé selon l'invention peut s'appliquer pour assembler un nombre élevé d'éléments. La figure 2a illustre le déplacement d'une buse (3) au-dessus d'une pluralité d'éléments (1) alignés en rangées. Le cordon de matériau de structure (4) représenté épouse la forme d'une portion du conteneur (5) des éléments situés à la périphérie de l'assemblage. La buse peut aussi se déplacer à l'aplomb des espaces (7) situés entre les éléments et ainsi déposer un cordon de matériau dans ces espaces. Il est possible de faire varier le débit de matière délivré par la buse. Ceci permet de réaliser des cordons présentant une épaisseur variant généralement de 0,1 mm à 10 mm, l'épaisseur étant mesurée selon la direction de l'axe longitudinal du conteneur.

Sur la figure 2a, le conteneur (5) des éléments est de forme cylindrique, mais tout format autre est envisageable, tel que le format parallélépipédique, encore appelé prismatique. De plus, les éléments sont représentés alignés, mais le procédé de l'invention conviendrait également à une disposition non ordonnée d'éléments.

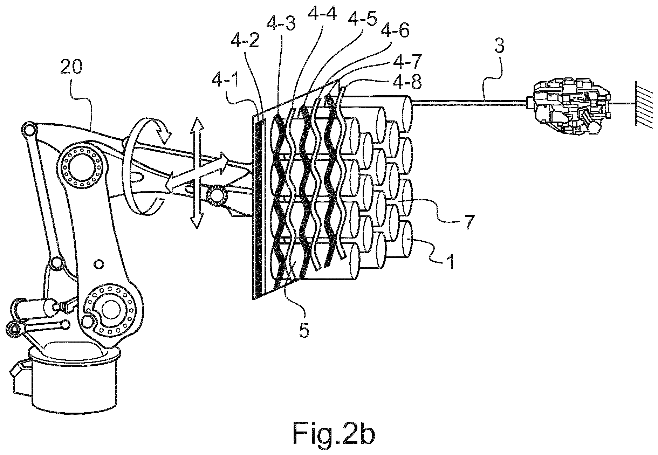

Généralement, c'est le déplacement de la buse qui permet de réaliser le tracé du cordon autour des éléments. Le support des éléments est dans ce cas fixe. On peut aussi envisager une configuration dans laquelle la buse est fixe et le support se déplace. A cet égard, la figure 2b est une représentation schématique du dépôt d'un cordon de matériau de structure au contact du conteneur des éléments électrochimiques. Une buse fixe (3) délivre le matériau de structure. Les éléments électrochimiques (1) sont disposés sur un support mobile dont le déplacement est dirigé par un robot (20). Les deux premiers cordons (4-1, 4-2) sont disposés dans un plan et épousent la forme de la paroi des conteneurs faisant face vers l'extérieur. Les cordons (4-3,..., 4-8) superposés aux deux premiers cordons (4-1, 4-2) épousent également la forme de la paroi des conteneurs faisant face vers l'extérieur et leur aspect en vagues résulte du déplacement de la buse dans la direction de l'axe longitudinal des éléments.

Un des avantages du procédé selon l'invention est qu'il s'adapte à toute forme de conteneur. Il est possible de changer rapidement le format des éléments sur une ligne de production. En cas de changement de format, on remplace dans l'ordinateur pilotant la buse, le fichier numérique contenant les coordonnées des cordons par un nouveau fichier numérique contenant les nouvelles coordonnées des cordons à fabriquer. L'invention évite d'avoir à recourir à des outillages différents pour différents formats d'éléments. La gestion des stocks est donc facilitée.

Le matériau de structure utilisé pour fabriquer un cordon est généralement un bon isolant électrique et présente une faible conductivité thermique, comme par exemple une matière plastique. Ceci permet de réduire le risque de court-circuit entre deux éléments voisins et d'éviter qu'un dégagement de chaleur survenu dans un des éléments ne se propage aux éléments voisins. Le matériau peut être déposé soit sous la forme d'un liquide visqueux ou d'un gel, soit sous la forme d'une poudre.

Dans le cas d'un matériau déposé sous la forme d'un cordon d'un liquide visqueux ou d'un gel, le matériau peut être un polymère thermoplastique déposé à l'aide d'une buse chaude. Le polymère durcit au cours de son refroidissement. Les matières thermoplastiques envisageables sont l'acrylonitrile butadiène styrène (ABS), les polycarbonates, les polyamides, les polysulfures de phénylène (PPS), les polyétherimides (PEI), le polyéthylène (PE), le polypropylène (PP), le poly(chlorure de vinyle) (PVC), les copolymères de styrène-éthylène-butylène-styrène (SEBS), le polystyrène (PS). Ces matériaux peuvent être utilisés sous forme pleine, ou sous forme d'une mousse par ajout d'un agent moussant externe. Une autre famille de polymères pouvant être déposés sous la forme d'un cordon d'un liquide visqueux ou d'un gel est constituée par les polymères thermodurcissables. Le durcissement du polymère peut être provoqué soit par une réaction de polymérisation de monomères en présence d'un agent de réticulation, soit sous l'effet de flashs de lumière ultraviolets appliqués à un bain de résine photosensible ou sous l'effet de la projection d'une image sur un bain de résine photosensible. Des exemples de polymères thermodurcissables sont les polymères époxyde, les polyuréthanes, les polyesters, les silicones, les polyisocyanurates. Ces polymères sont soit moussant par eux-mêmes, ou obtenus sous forme d'une mousse grâce à l'addition d'un gaz ou d'un agent porogène.

Dans le cas d'un matériau déposé sous la forme d'une poudre, ce peut être un polymère thermoplastique. La cohésion des particules de poudre est obtenue par frittage, par exemple par un frittage laser.

L'utilisation d'un logiciel de CAO permet d'obtenir une très grande précision sur la nature et l'emplacement des couches de cordon. L'invention permet la réalisation d'une structure d'assemblage présentant une composition et/ou une porosité non homogènes. Par exemple, des cordons peuvent avoir des épaisseurs différentes ou être constitués de matériaux de nature différente. Un même cordon peut comprendre des matériaux de nature différente. Des cordons peuvent présenter une porosité ou une masse volumique différente d'autres cordons.

Une cloison qui est constituée de la superposition d'une pluralité de cordons, peut présenter plusieurs zones, chaque zone étant caractérisée par une épaisseur constante des cordons situés au sein de cette zone. Une cloison peut présenter plusieurs zones de porosité ou de masses volumiques différentes.

Le procédé permet d'adapter les caractéristiques précitées du cordon (nature chimique, épaisseur, masse volumique, porosité) en fonction de l'emplacement du cordon dans l'assemblage. Les parties de l'assemblage soumises aux contraintes mécaniques les plus fortes seront caractérisées par des épaisseurs de cordon, des masses volumiques de cordon supérieures aux parties soumises à des contraintes mécaniques plus faibles. On peut prévoir un gradient d'épaisseur, de masse volumique ou de porosité du matériau de cordon autour d'un même élément le long de la direction longitudinale du conteneur de cet élément, c'est-à-dire généralement dans la direction de l'empilement des cordons. Il est en effet connu que le conteneur d'un élément de type lithium-ion par exemple gonfle au cours de la charge de l'élément et que ce gonflement présente une amplitude maximale à mi-hauteur environ du conteneur, alors qu'elle est moindre dans les régions proches du couvercle ou du fond du conteneur. On peut donc prévoir que le matériau de cordon utilisé à mi-hauteur de l'élément présente une rigidité supérieure à celle du matériau de cordon utilisé dans la région proche du couvercle ou de la région du fond du conteneur qui sont moins soumises au gonflement. Ceci permet de maintenir une compression suffisante des électrodes à mi-hauteur du conteneur. Cet avantage peut aussi être mis à profit pour compenser des variations de volume liées à des coefficients de dilatation thermique différents des divers matériaux utilisés dans la batterie.

On peut aussi prévoir que le matériau de structure au contact des éléments situés à la périphérie de l'assemblage possède une masse volumique supérieure à celle du matériau de structure au contact des éléments ne se trouvant pas à la périphérie de l'assemblage. Les épaisseurs des cordons du matériau de structure situés au contact des éléments en périphérie de l'assemblage peuvent être plus fines que celles des cordons situés au contact des éléments plus proches du centre de l'assemblage.

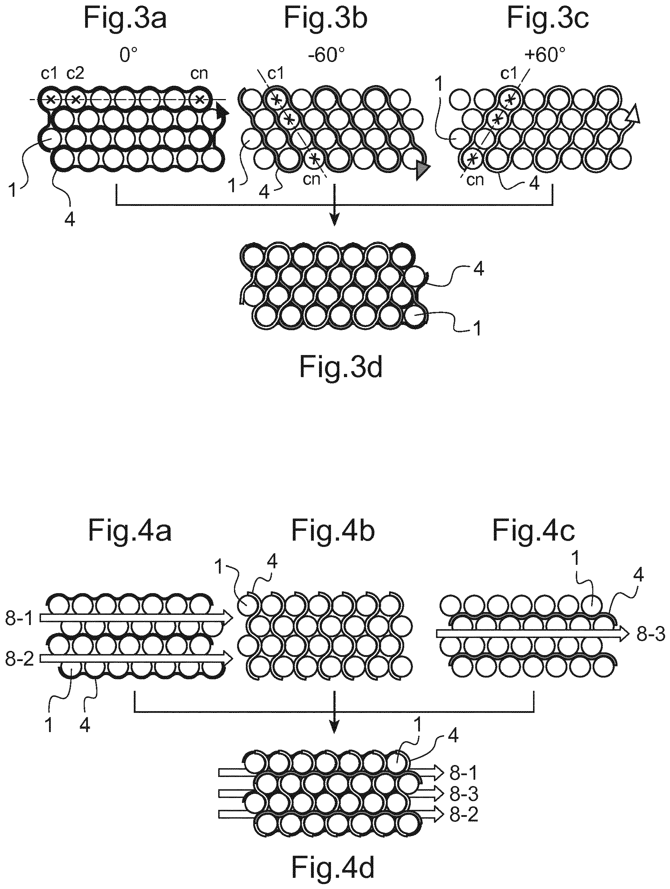

La direction du tracé du cordon peut varier d'une couche à l'autre. Les figures 3a à 3c représentent une vue en coupe transversale de plusieurs éléments (1) de format cylindrique alignés. Les sections transversales des éléments ont une forme circulaire. Les centres des cercles (c1, c2,...., cn) sont alignés selon trois directions. Une première direction forme un angle de 0° par rapport à l'horizontale (figure 3a), une seconde direction forme un angle de -60° par rapport à l'horizontale (figure 3b) et une troisième direction forme un angle de +60° par rapport à l'horizontale (figure 3c). On peut définir sur chacune des figures 3a à 3c une direction principale d'alignement du cordon. La direction principale d'alignement du cordon peut être définie comme étant la direction parallèle à la direction formée l'alignement des centres des sections transversales des éléments. Par exemple sur la figure 3a, les centres des sections transversales c1, c2, ..., cn sont alignés selon une direction formant un angle de 0° avec l'horizontale. Le cordon de matériau de structure s'étend selon une direction essentiellement parallèle à la direction formée par l'alignement des centres c1, c2, ..., cn. De la même manière sur la figure 3b, on constate que la direction formée par l'alignement des centres c1, c2, ..., cn, est orientée à -60° par rapport à l'horizontale. Sur la figure 3c, la direction formée par l'alignement des centres c1, c2, ..., cn est orientée à +60° par rapport à l'horizontale. La figure 3c représente l'empilement des trois couches de cordon représentées aux figures 3a à 3c. Cet empilement permet de maximiser le taux de remplissage des espaces inter-éléments par le matériau de structure. Dans l'exemple de la figure 3d, ce taux est estimé à 50%. Cette disposition des tracés des cordons offre les avantages suivants:
- la présence du matériau de structure bloque la propagation d'un fluide d'une cavité à une autre. Ainsi, si un gaz est libéré du conteneur d'un élément défaillant, il ne se propage pas aux éléments voisins.
- l'assemblage présente une très forte tenue mécanique. Il n'existe pas de zones de faiblesse.
- le matériau de structure est réparti de manière homogène sur toute la surface de l'assemblage, ce qui lui confère des propriétés mécaniques isotropes.
- les éléments sont bien isolés thermiquement.

La disposition des couches illustrée aux Figures 3a à 3c n'est pas limitée à des directions principales d'alignement de 0°, -60° et +60°. D'autres variations angulaires de la direction principale d'alignement des couches sont envisageables. On peut par exemple envisager un empilement répété de deux couches de cordon, la première étant disposée selon une direction principale de 0°, la seconde étant disposée selon une direction principale de 90°.

Un des avantages du procédé selon l'invention est qu'il permet la création de canaux d'air entre des éléments sans avoir à recourir à des pièces supplémentaires pour matérialiser ces canaux. En effet, on peut laisser un espace suffisant entre deux éléments ou entre deux rangées d'éléments pour créer un canal de circulation naturelle ou forcée d'un fluide caloporteur, tel que l'air. Chaque canal peut par exemple présenter une largeur d'au moins 5 mm. Pour un niveau de couche donné Ci, il peut exister un ou plusieurs canaux de circulation d'air. La direction de circulation de l'air dans le ou les canaux d'une couche donnée peut être différente de la direction de circulation de l'air dans le ou les canaux d'une autre couche.

La figure 4a représente quatre rangées d'éléments. Deux canaux (8-1, 8-2) sont matérialisés par l'espace vide situé entre deux rangées d'éléments (1). Ces deux canaux sont orientés dans une direction faisant un angle de 0° par rapport à l'horizontale.

Sur la figure 4b, les cordons sont disposés selon une direction principale orientée à 90° par rapport à l'horizontale. Cette disposition bloque la circulation d'air dans les directions orientées à 0° et 90° par rapport à l'horizontale.

La figure 4c représente quatre rangées d'éléments. Un seul canal (8-3) est matérialisé par l'espace entre deux rangées d'élément. Il est orienté dans une direction faisant un angle de 0° par rapport à l'horizontale.

La figure 4d représente l'empilement des trois couches de cordon des figures 4a à 4c. Le taux de remplissage est estimé à 30%.

On peut décider d'aménager des canaux d'air dans les zones de l'assemblage qui sont les plus exposées à un échauffement et au contraire remplir par un cordon de matériau de structure les zones de l'assemblage moins soumises à un échauffement. L'invention facilite la gestion des stocks en réduisant le nombre de pièces requises. Il n'est en effet plus nécessaire de recourir à des pièces formant un canal de circulation de fluide, ce canal étant créé, dans l'invention, par l'espace entre des éléments ou des rangées d'éléments.

L'invention permet également le montage d'accessoires favorisant les échanges thermiques. Il est possible soit de les fabriquer de façon additive pour qu'ils soient automatiquement intégrés à l'assemblage lors de la construction des empilements de cordon, soit de les ajouter à l'assemblage et de les fixer à celui-ci par surmoulage. Dans le premier cas, on peut prolonger le dépôt du cordon de matériau de structure au-delà de l'assemblage pour créer des parois canalisant le flux d'air dans une zone d'entrée. La création de ces parois se fait concomitamment avec l'empilement des cloisons. Dans le second cas, les accessoires sont des pièces qui sont apportées à l'assemblage et surmoulées par un matériau de structure. Les pièces favorisant les échanges thermiques peuvent être choisies parmi des plénums, des diffuseurs, des caloducs ou des échangeurs de chaleur. Les pièces favorisant les échanges thermiques, et fabriquées de façon additive, peuvent être constituées d'un ou de plusieurs matériaux à changement de phase ou d'un ou de plusieurs matériaux présentant une capacité thermique massique importante. Ces matériaux peuvent en outre comprendre des charges conductrices thermiques ou des charges améliorant les propriétés mécaniques.

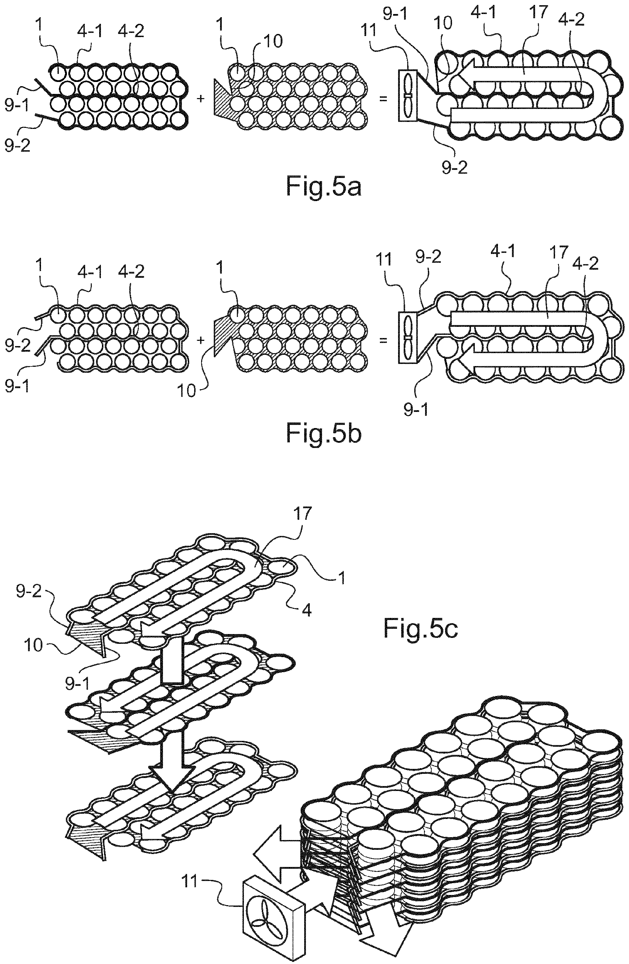

L'invention permet de créer des couloirs de circulation d'air s'étendant sur deux ou trois dimensions. Par exemple, la figure 5a représente une vue en coupe transversale d'un assemblage d'éléments dans lequel un canal de circulation d'air en forme de « U » a été créé. L'assemblage comprend quatre rangées d'éléments. Un premier cordon (4-1) de matériau de structure a été déposé sur une partie du conteneur des éléments situés à la périphérie de l'assemblage. Un second cordon (4-2) a été déposé entre la deuxième et la troisième rangée d'éléments. Un canal de circulation d'air (17) en forme de « U » est ainsi constitué. L'espace entre les deux rangées supérieures de la figure forme l'une des branches du « U ». L'espace entre les deux rangées inférieures de la figure forme la seconde branche du « U ». La fabrication additive a été poursuivie pour créer deux parois droites (9-1, 9-2) dans le prolongement de deux cordons. Une plaque séparatrice (10) est fixée à l'assemblage par surmoulage. Le plan de la plaque est parallèle aux couches de cordons. L'ensemble forme un canal de circulation d'air bouclé. Un ventilateur (11) est placé au contact de l'extrémité des parois pour créer un flux d'air forcé.

Selon le même principe que celui exposé pour la figure 5a, on peut fabriquer un canal de circulation d'air bouclé dans lequel l'air circule de la branche supérieure du U vers la branche inférieure du U, donc en sens contraire du sens de circulation de l'air sur la figure 5a. La disposition de la figure 5b diffère de celle de la figure 5a en ce que l'une des parois droites (9-2) est située dans le prolongement du cordon situé en position supérieure sur la figure 5b alors que sur la figure 5a, la paroi droite (9-2) résulte du prolongement du cordon situé en position inférieure. Une plaque séparatrice (10) est disposée pour concentrer le flux d'air dans le canal de circulation d'air bouclé.

La figure 5c représente la superposition de trois couches de cordons. Une première couche comprenant un cordon et des parois disposées selon l'arrangement de la figure 5a est intercalé entre deux couches comprenant chacune un cordon et des parois disposées selon l'arrangement de la figure 5b. Une ventilation forcée est placée à une extrémité des canaux. On peut donc créer par superposition de couches de cordon, des canaux de circulation d'air bouclé dans lesquels l'air circule à contre-courant. Ceci permet d'obtenir une bonne homogénéité de la température dans l'assemblage, ainsi qu'une bonne compacité de l'assemblage.

Dans un souci de clarté, le principe de la création de canaux de circulation d'air par superposition de couches de cordon est illustré aux figures 5a et 5c en prenant l'exemple d'un canal de circulation d'air dont la hauteur correspond à la hauteur d'un cordon. Il est cependant entendu que des canaux de circulation d'air de hauteur supérieure peuvent être créés. Il est possible de modifier la hauteur du canal de circulation d'air en modifiant le nombre de cordons et/ou la hauteur de chaque cordon. De plus, le canal de circulation d'air peut s'étendre dans les trois directions de l'espace, au lieu de deux directions comme représenté aux figures 5a-5c. Enfin, la forme du canal n'est pas limitée à une forme en U, mais toute autre forme est réalisable, telle qu'une forme en « W » ou en « Z ».

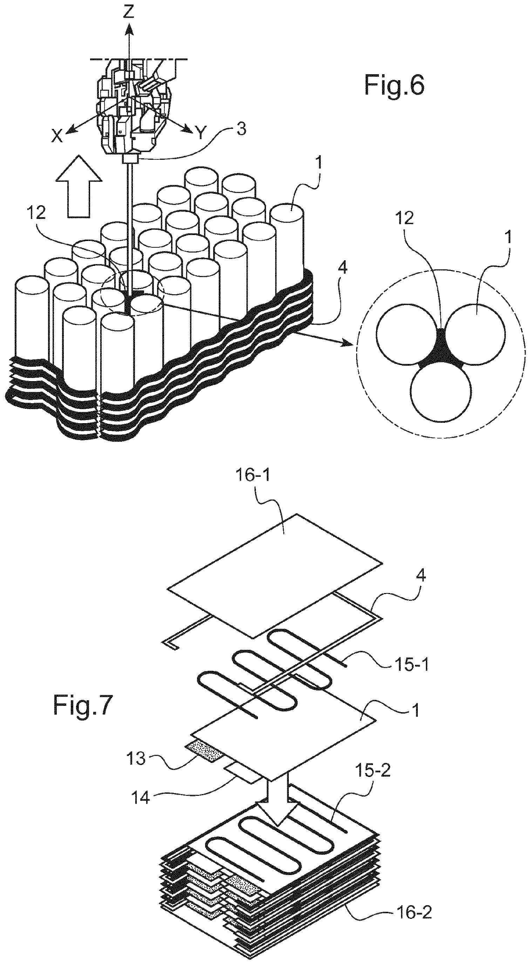

On peut décider de n'utiliser la technique de fabrication additive que pour certaines parties de l'assemblage et continuer d'utiliser la technique connue de coulée de mousse (ou de résine) pour d'autres parties de l'assemblage. Par exemple, on peut envisager que la paroi des conteneur des éléments situés à la périphérie de l'assemblage soit maintenue par la superposition de cordons de matériau de structure obtenus par déplacement de la buse dans un plan horizontal XY, tandis que l'espace entre des éléments voisins est rempli par un dépôt de matériau de structure selon une seule direction, par exemple la direction verticale Z. Ce mode de réalisation est illustré à la figure 6 qui représente un assemblage d'éléments (1) dans lequel un espace situé (12) entre des éléments contigus est rempli en une seule fois d'un matériau de structure. Ce mode de réalisation présente les avantages suivants :
- il permet d'augmenter la productivité. Le dépôt d'une seule couche d'un matériau de structure dans l'espace situé entre des éléments requiert moins de temps que le dépôt de couches successives de cordon. En effet, il n'est plus nécessaire d'attendre la solidification d'une couche avant de procéder au dépôt de la couche supérieure.
- quand l'espace situé entre des éléments est dépourvu de matériau de structure, il peut être utilisé comme canal de circulation d'air dans le sens vertical.

Selon un mode de réalisation de l'invention, certains éléments de l'assemblage sont maintenus par un matériau présentant une masse volumique différente de celle du matériau utilisé pour maintenir d'autres éléments de l'assemblage. Par exemple, le matériau de structure au contact des éléments électrochimiques situés à la périphérie de l'assemblage peut posséder une masse volumique supérieure à celle du matériau de structure au contact des éléments ne se trouvant pas à la périphérie de l'assemblage. On peut faire varier la masse volumique du matériau en faisant varier sa porosité.

Des zones de l'assemblage non remplies de cordon peuvent être communicantes ou non les unes avec les autres de couche à couche selon 1, 2 ou 3 directions de l'espace. Ces zones laissées vides peuvent être alignées ou non selon des directions privilégies, pour favoriser ou non des axes de faiblesse.

Un mode de réalisation convenant aux éléments de format parallélépipédique de faible épaisseur ou à des éléments de type « pochette » va maintenant être décrit. Dans ce mode de réalisation, le dépôt du cordon de matériau se fait de manière concomitante avec la mise en place de l'élément. Il peut s'agir d'un élément de format parallélépipède présentant une épaisseur inférieure ou égale à 15 mm, de préférence inférieure ou égale à 10 mm. Un, deux ou un nombre supérieur de cordon est (sont) déposé(s) au contact de la périphérie d'un élément. L'élément est surmoulé par le ou les cordon(s) de matériau de structure et est maintenu par solidification/cohésion du matériau de structure. Un second élément est placé sur le premier élément. Un, deux ou un nombre supérieur de cordon de matériau est (sont) déposé(s) au contact de la périphérie du second élément. De préférence, on place une couche d'un matériau isolant électrique entre les deux éléments pour éviter tout contact électrique entre ceux-ci ou pour améliorer l'isolation thermique ou l'adhérence entre ces deux éléments. On répète les étapes d'empilement des éléments et de dépose de cordon de matériau de structure autant de fois que nécessaire. La figure 7 montre un assemblage obtenu par ce procédé. Plusieurs éléments de format parallélépipédique de faible épaisseur sont empilés les uns sur les autres. Les différents constituants situés sur le dessus de l'empilement sont vus en éclaté. On distingue l'élément électrochimique (1) duquel dépassent les extrémités des feuillards des électrodes positive (13) et négative (14). Des séparateurs (15-1) et (15-2) isolent électriquement un élément des deux autres éléments entre lesquels il est intercalé. Un cordon de matériau de structure (4) entoure une partie de l'élément. Les éléments situés aux deux extrémités de l'empilement sont recouverts d'une paroi (16-1, 16-2) qui peut être une des parois d'un boitier servant à loger la batterie.

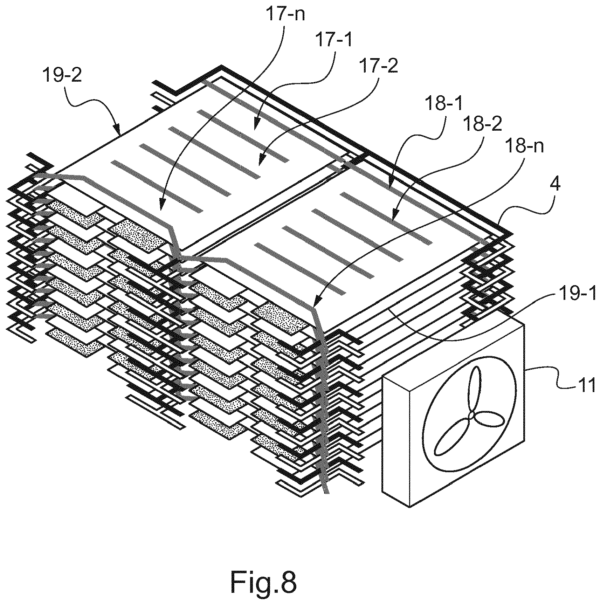

Il est possible de créer des canaux de circulation d'air (17-1, 17-2, ..., 17-n) à la surface des éléments. La figure 8 représente une vue d'un assemblage d'éléments de format parallélépipédique, muni d'un ventilateur (11) assurant une convection d'air forcée. Les éléments sont entourés d'un cordon (4) d'un matériau de structure. Des canaux de circulation d'air résultent de la formation de cloisons droites parallèles (18-1, 18-2, ..., 18-n) déposées sur une des faces latérales des éléments. Ces cloisons peuvent être obtenues par dépôt d'un cordon selon le procédé de fabrication additive.

La figure 8 montre qu'une portion (19-1, 19-2) de la longueur de chaque parallélépipède n'est pas recouverte de cordon d'un matériau de structure. Cette portion non recouverte de cordon sert de canal d'entrée ou de sortie pour la circulation forcée d'air. Dans la zone située sur la longueur de conteneur de l'élément, le tracé du cordon forme un angle de 90° par rapport à la longueur du parallélépipède. Cette portion du cordon formant un angle de 90° (19-1) constitue un conduit d'entrée d'air dans les canaux (17-1, 17-2, ..., 17-n). La portion du cordon formant un angle de 90° (19-2) située à l'extrémité opposée constitue un conduit pour la sortie d'air du canal.

L'invention procure également les avantages suivants :
- Le temps de fabrication est réduit en comparaison avec le procédé par coulée de résine car il n'est plus nécessaire de recourir à des résines présentant une durée de solidification élevée, comme cela est le cas pour un procédé d'assemblage par coulée de résine pour lequel il est nécessaire d'utiliser des résines présentant une durée de solidification élevée, pour des volumes importants de résine. Selon l'invention, une durée de solidification inférieure à 5 minutes peut suffire. De plus, comme la polymérisation s'effectue progressivement, couche par couche, on évite les fortes hausses de températures que l'on peut observer lorsqu'on coule en une seule fois une grande quantité d'un matériau polymérisable.
- Il est plus facile de remédier à des fuites de matériau puisque celui-ci est déposé en plusieurs étape, au lieu d'une seule étape mettant en œuvre une grande quantité de matériau.
- On réduit le risque d'apparition de bulles d'air présentant un diamètre important (quelques centimètres de diamètre). Il est en outre plus facile de les détecter.
- Le coût de fabrication d'un assemblage est réduit en comparaison avec la technique d'assemblage utilisant des moyens de liaison mécaniques ou la technique de coulée d'une mousse.
- Il est possible de créer des canaux de circulation d'air dans la structure de maintien des éléments, ce qui était impossible avec la technique de coulée de mousse.
- Il est possible d'assembler des éléments de grande dimension ou en grandes quantités, tels que ceux utilisés pour les applications ferroviaires ou navales.
- Le procédé peut être utilisé pour réaliser des prototypes en petite et moyenne séries.
- Le procédé permet de créer des espaces vides de forme déterminée qui peuvent être occupés par des dispositifs de gestion du fonctionnement de la batterie (capteurs de tension, température, électronique de contrôle, faisceau électrique).

Le procédé de l'invention s'applique à toute technologie d'élément électrochimique. Les éléments de type lithium-ion sont néanmoins préférés.

## Revendications

1. Utilisation d'une technique de fabrication additive pour assembler une pluralité d'éléments électrochimiques (1), la technique de fabrication additive servant à la création de cloisons entre deux éléments contigus de la pluralité d'éléments électrochimiques.

2. Procédé de fabrication d'un assemblage d'une pluralité d'éléments électrochimiques (1), les éléments électrochimiques comprenant chacun un conteneur (5) présentant une paroi, ledit procédé comprenant les étapes de :
a) mise à disposition d'une pluralité d'éléments électrochimiques et
b) assemblage de la pluralité d'éléments électrochimiques par une technique de fabrication additive comprenant les étapes de :
i) dépôt d'un cordon Ci (4) d'au moins un matériau au contact d'au moins une portion de la paroi d'un des conteneurs ;
ii) solidification totale ou partielle du matériau ;
iii) dépôt d'un cordon Ci+1 d'un matériau soit sur au moins une portion du cordon Ci préalablement déposé, soit sur un élément électrochimique, le matériau du cordon Ci+1 pouvant être identique ou différent du matériau du cordon Ci,
iv) répétition des étapes i) à iii) jusqu'à ce que la superposition des cordons conduise à la formation de cloisons assurant l'assemblage des éléments électrochimiques.

3. Procédé de fabrication d'un assemblage d'une pluralité d'éléments électrochimiques (1) de format prismatique ou de type pochette, les éléments électrochimiques comprenant chacun un conteneur (5) présentant une paroi, ledit procédé utilisant une technique de fabrication additive pour assembler la pluralité d'éléments électrochimiques, ledit procédé comprenant les étapes de:
a) mise à disposition d'un élément électrochimique Ei ;
b) dépôt d'au moins un cordon Ci (4) d'au moins un matériau au contact d'au moins une portion de la paroi du conteneur de l'élément électrochimique Ei ;
c) solidification totale ou partielle du matériau du cordon Ci ;
d) superposition d'un élément électrochimique Ei+1 sur l'élément électrochimique Ei ;
e) dépôt d'au moins un cordon Ci+1 d'au moins un matériau au contact d'au moins une portion de la paroi du conteneur de l'élément électrochimique Ei+1, le matériau du cordon Ci+1 pouvant être identique ou différent du matériau du cordon Ci ;
f) solidification totale ou partielle du matériau du cordon Ci+1 ;
g) répétition des étapes d) à f).

4. Procédé selon l'une des revendications 2 à 3, dans lequel chaque cordon a une épaisseur, mesurée dans la direction de l'axe longitudinal du conteneur, variant de 0,1 à 10 mm.

5. Procédé selon l'une des revendications 2 à 4, dans lequel au moins deux cordons ont des épaisseurs différentes.

6. Procédé selon l'une des revendications 2 à 5, dans lequel un tracé du dépôt du cordon Ci est réalisé :
a) soit en déplaçant un appareil (3) destiné à déposer le cordon (4) et en maintenant la pluralité d'éléments électrochimiques dans une position fixe,
b) soit en déplaçant la pluralité d'éléments électrochimiques et en maintenant fixe l'appareil destiné à déposer le cordon.

7. Procédé selon la revendication 6, dans lequel le tracé du dépôt du cordon Ci s'effectue soit dans un plan, soit dans les trois directions de l'espace et le cordon Ci est en contact avec des éléments électrochimiques et/ou le cordon Ci-1.

8. Un assemblage d'une pluralité d'éléments électrochimiques dans lequel les éléments électrochimiques (1) comprennent un conteneur (5) présentant une paroi, ledit assemblage étant **caractérisé en ce qu'**au moins une portion de la paroi d'au moins un des conteneurs est en contact avec une cloison obtenue par une technique de fabrication additive et est constituée de la superposition d'une pluralité de cordons (4-1, 4-2) d'un matériau de structure, la cloison étant située entre deux éléments électrochimiques contigus.

9. Assemblage selon la revendication 8, dans lequel le cordon Ci est déposé selon une première direction principale, le cordon Ci+1 superposé sur le cordon Ci est déposé selon une seconde direction principale, une direction principale d'alignement du cordon étant définie comme étant une direction parallèle à une direction formée par l'alignement des centres des sections transversales des éléments.

10. Assemblage selon la revendication 9, dans lequel la variation angulaire de la direction principale de dépose de deux cordons contigus Ci et Ci+1 est prédéterminée.

11. Assemblage selon l'une des revendications 8 à 10, comprenant au moins deux rangées d'éléments électrochimiques alignés et un espace vide existe entre deux rangées, cet espace vide constituant un canal (17) pour une circulation naturelle ou forcée d'un fluide.

12. Assemblage selon la revendication 11, comprenant au moins deux canaux pour la circulation naturelle ou forcée d'un fluide.

13. Assemblage selon la revendication 11 ou 12, comprenant au moins trois rangées d'éléments électrochimiques et au moins un cordon délimite un canal non rectiligne s'étendant selon deux ou trois dimensions de l'espace, pour la circulation du fluide.

14. Assemblage selon l'une des revendications 8 à 13, dans lequel la circulation du fluide dans l'espace situé entre les cordons Ci et Ci+n avec n ≥ 1 s'effectue à contre-courant de la circulation du fluide situé dans l'espace situé entre les cordons Ci et Ci-p avec p ≥ 1.

15. Assemblage selon l'une des revendications 8 à 14, comprenant en outre des moyens (9-1, 9-2, 10) pour améliorer les échanges thermiques, ces moyens étant par exemple choisis dans le groupe consistant en des plénums, des diffuseurs, des plaques séparatrices, des échangeurs de chaleur, des caloducs et des pièces de structure.

16. Assemblage selon la revendication 15, dans lequel les moyens pour améliorer les échanges thermiques sont noyés au moins partiellement dans un matériau également utilisé pour réaliser un cordon.

17. Assemblage selon l'une des revendications 8 à 16, dans lequel au moins un espace situé entre des éléments contigus est complètement rempli d'un seul dépôt d'un matériau de structure.

18. Assemblage selon l'une des revendications 8 à 17, dans lequel le matériau au contact des éléments électrochimiques situés à la périphérie de l'assemblage possède une masse volumique différente de celle du matériau au contact des éléments ne se trouvant pas à la périphérie de l'assemblage.

19. Assemblage selon la revendication 18, dans lequel le matériau au contact des éléments électrochimiques situés à la périphérie de l'assemblage possède une masse volumique supérieure à celle du matériau au contact des éléments ne se trouvant pas à la périphérie de l'assemblage.

## Patentansprüche

1. Verwendung einer additiven Fertigungstechnik zum Zusammenbauen mehrerer elektrochemischer Zellen (1), wobei die additive Fertigungstechnik verwendet wird, um Trennwände zwischen zwei aneinandergrenzenden Zellen der mehreren elektrochemischen Zellen zu erzeugen.

2. Verfahren zur Herstellung einer Anordnung aus mehreren elektrochemischen Zellen (1), wobei die elektrochemischen Zellen jeweils einen Behälter (5) mit einer Wand umfassen, wobei das Verfahren die Schritte umfasst
a) Bereitstellung mehrerer elektrochemischer Zellen und
b) Zusammenbau der Vielzahl von elektrochemischen Zellen durch ein additives Herstellungsverfahren, umfassend die Schritte von
i. Aufbringen einer Raupe Ci (4) aus mindestens einem Material in Kontakt mit mindestens einem Abschnitt der Wand eines der Behälter,
ii. vollständige oder teilweise Verfestigung des Materials
iii. Ablagerung einer Raupe Ci+1 eines Materials entweder auf mindestens einem Abschnitt der Raupe Ci zuvor abgeschieden, entweder auf einer elektrochemischen Zelle, wobei das Material der Raupe Ci+1 identisch mit dem Material der Raupe Ci oder verschieden sein kann,
iv. Wiederholen der Schritte i) bis iii), bis die Überlagerung der Raupen zur Bildung von Trennwänden führt, die den Zusammenbau der elektrochemischen Zellen gewährleisten.

3. Verfahren zur Herstellung einer Anordnung aus mehreren elektrochemische Zellen (1) mit prismatischem oder beutelartigem Format, wobei jede elektrochemischen Zelle einen Behälter (5) mit einer Wand umfasst, wobei das Verfahren eine additive Herstellungstechnik verwendet, um die Vielzahl von elektrochemischen Zellen zusammenzubauen, wobei das Verfahren die Schritte umfasst:
a) Bereitstellung einer elektrochemischen Zelle Ei
b) Aufbringen mindestens einer Raupe Ci (4) aus mindestens einem Material in Kontakt mit mindestens einem Teil der Wand des Behälters der elektrochemischen Zelle Ei
c) vollständige oder teilweise Verfestigung des Materials der Raupe Ci
d) Überlagerung einer elektrochemischen Zelle Ei+1 auf der elektrochemischen Zelle
e) Aufbringen mindestens einer Raupe Ci+1 aus mindestens einem Material in Kontakt mit mindestens einem Teil der Wand des Behälters der elektrochemischen Zelle Ei+1, wobei das Material der Raupe Ci+1 identisch mit dem Material der Raupe Ci oder verschieden sein kann,
f) vollständige oder teilweise Erstarrung des Materials der Raupe Ci+1
g) Wiederholen der Schritte d) bis f).

4. Verfahren nach einem der Ansprüche 2 bis 3, wobei jede Raupe eine in Richtung der Längsachse des Behälters gemessene Dicke von 0,1 bis 10 mm aufweist.

5. Verfahren nach einem der Ansprüche 2 bis 4, wobei mindestens zwei Raupe unterschiedliche Dicken aufweisen.

6. Verfahren nach einem der Ansprüche 2 bis 5, bei dem eine Spur der Abscheidung der Raupe Ci erzeugt wird
a) entweder durch Bewegen einer Vorrichtung (3), die dazu bestimmt ist, das Raupe (4) abzuscheiden, und durch Halten der Vielzahl von elektrochemischen Zellen in einer festen Position,
b) oder durch Bewegen der Vielzahl von elektrochemischen Zellen und durch Fixieren der Vorrichtung, die dazu bestimmt ist, die Raupe abzuscheiden.

7. Verfahren nach Anspruch 6, bei dem die Spur der Abscheidung der Raupe Ci entweder in einer Ebene oder in den drei Raumrichtungen erfolgt und die Raupe Ci in Kontakt mit elektrochemischen Zellen und/oder der Raupe Ci-1 steht

8. Eine Anordnung aus mehreren elektrochemischen Zellen, bei der die elektrochemische Zellen (1) einen Behälter (5) mit einer Wand umfassen, wobei die Anordnung **dadurch gekennzeichnet ist, dass** mindestens ein Teil der Wand von mindestens einem der Behälter in Kontakt mit einer Trennwand steht, die durch ein additives Herstellungsverfahren erhalten wird und besteht aus die Überlagerung mehrerer Raupen (4-1, 4-2) aus einem Strukturmaterial, wobei die Trennwand zwischen zwei aneinandergrenzenden elektrochemischen Zellen angeordnet ist.

9. Anordnung nach Anspruch 8, bei der die Raupe Ci in einer ersten Hauptrichtung aufgebracht wird, die Raupe Ci+1, die der Raupe Ci überlagert ist, in einer zweiten Hauptrichtung aufgebracht wird, wobei eine Hauptausrichtungsrichtung der Raupe als eine Richtung definiert ist, die parallel zu einer Richtung ist, die durch die Ausrichtung der Mitten der Querschnitte der Zellen gebildet wird.

10. Anordnung nach Anspruch 9, bei der die Winkelvariation der Hauptlegerichtung zweier aneinandergrenzender Raupen Ci und Ci+1 vorbestimmt ist.

11. Anordnung nach einem der Ansprüche 8 bis 10, die mindestens zwei Reihen von ausgerichteten elektrochemischen Zellen umfasst und zwischen zwei Reihen ein leerer Raum vorhanden ist, wobei dieser leere Raum einen Kanal (17) für eine natürliche oder erzwungene Zirkulation eines Fluids bildet.

12. Anordnung nach Anspruch 11, umfassend mindestens zwei Kanäle für die natürliche oder erzwungene Zirkulation eines Fluids.

13. Anordnung nach Anspruch 11 oder 12, umfassend mindestens drei Reihen elektrochemischer Zellen und mindestens eine Raupe, die einen nicht geradlinigen Kanal begrenzt, der sich entlang zweier oder dreier Raumdimensionen erstreckt, für die Zirkulation des Fluids.

14. Anordnung nach einem der Ansprüche 8 bis 13, bei dem die Zirkulation der Flüssigkeit in dem zwischen den Raupen Ci und Ci+n mit n ≥ I liegenden Raum gegen den Strom von der Zirkulation der Flüssigkeit, die sich in dem Raum befindet, der sich zwischen den Raupen Ci und Ci-p befindet, mit p ≥ 1 erfolgt.

15. Anordnung nach einem der Ansprüche 8 bis 14, ferner umfassend Mittel (9-1, 9-2, 10) zum Verbessern des Wärmeaustauschs, wobei diese Mittel beispielsweise aus der Gruppe ausgewählt sind, die aus Verteilern, Diffusoren, Trennplatten, Wärmetauscher, Wärmeleitungen und Konstruktionsteile besteht.

16. Anordnung nach Anspruch 15, bei der die Mittel zur Verbesserung des Wärmeaustauschs zumindest teilweise in ein Material eingebettet sind, das auch zur Herstellung einer Raupe verwendet wird.

17. Anordnung nach einem der Ansprüche 8 bis 16, wobei mindestens ein Zwischenraum, der sich zwischen aneinandergrenzenden Zellen befindet, vollständig mit einer einzigen Ablagerung eines Strukturmaterials ausgefüllt ist.

18. Anordnung nach einem der Ansprüche 8 bis 17, wobei das Material in Kontakt mit den am Umfang der Anordnung angeordneten elektrochemischen Zellen eine andere Dichte als das Material in Kontakt mit den nicht am Umfang der Anordnung angeordneten Zellen aufweist.

19. Anordnung nach Anspruch 18, bei der das Material in Kontakt mit den an der Peripherie der Anordnung angeordneten elektrochemischen Zellen eine höhere Dichte als das Material in Kontakt mit den nicht an der Peripherie der Anordnung angeordneten Zellen aufweist.

## Claims

1. The use of an additive manufacturing technique for assembling a plurality of electrochemical cells (1), the additive manufacturing technique being used for creating partitions between two contiguous cells of the plurality of electrochemical cells.

2. A method of manufacturing an assembly of a plurality of electrochemical cells (1), the cells each comprising a container (5) having a wall, said method comprising the steps of:
a) providing a plurality of cells and
b) assembling the plurality of cells by an additive manufacturing technique comprising the steps of:
i) depositing a continuous bead Ci (4) of at least one material in contact with at least a portion of a wall of one of the containers;
ii) complete or partial solidification of the material;
iii) depositing a bead Ci +1 of a material either on at least a portion of the previously deposited bead Ci or on an electrochemical cell, the material of the bead Ci + 1 being able to be the same or different from the material of the bead Ci,
iv) repeating steps i) to iii) up until overlaying of the beads leads to the formation of partitions ensuring the assembly of the cells.

3. A method of manufacturing an assembly of a plurality of electrochemical cells (1) of prismatic shape or of the pouch type, the cells each comprising a container (5) having a wall, said method employing an additive manufacturing technique for assembling the plurality of cells, said method comprising the steps of:
a) providing an electrochemical cell Ei;
b) depositing at least one continuous bead Ci (4) of at least one material in contact with at least a portion of a wall of the container of electrochemical cell Ei;
c) totally or partially solidifying the material of bead Ci;
d) overlaying an electrochemical cell Ei + 1 on cell Ei;
e) depositing at least one bead Ci + 1 of at least one material in contact with at least a portion of a wall of the container of cell Ei + 1, a material of the bead Ci + 1 being able to be the same or different to that of a material of bead Ci;
f) total or partial solidification of the material of the bead Ci + 1;
g) repeating steps d) to f).

4. The method according to one of claims 2-3, wherein each bead has a thickness, measured in a direction of a longitudinal axis of the container, varying from 0.1 mm to 10 mm.

5. The method according to one of claims 2 to 4, wherein at least two beads have different thicknesses.

6. The method according to one of claims 2 to 5, wherein a pattern of the deposition of bead Ci is obtained:
a) by moving an apparatus (3) for depositing the bead (4) while keeping the plurality of cells in a fixed position,
b) by moving the plurality of cells and keeping the device for depositing the bead in a fixed position.

7. The method of claim 6, wherein a path of the deposition of the bead Ci is carried out either in a plane or in the three directions of space and bead Ci is in contact with cells and/or with bead Ci-1.

8. An assembly of a plurality of electrochemical cells wherein a cell (1) comprises a container (5) having a wall, said assembly being **characterized in that** at least a portion of a wall of at least one container is in contact with a partition obtained by an additive manufacturing technique and consists of the overlaying of a plurality of beads (4-1, 4-2) of a structuring material, the partition being located between two contiguous electrochemical cells.

9. The assembly of claim 8, wherein bead Ci is deposited in a first main direction, bead Ci + 1 Ci placed on top of the bead is deposited in a second main direction, a first main direction of alignment of a bead being defined as a direction which is parallel to a direction informed by aligning centers of cross-sections of cells.

10. The assembly of claim 9, wherein an angular variation of a main direction of depositing two adjacent beads Ci and Ci + 1 is predetermined.

11. The assembly according to one of claims 8 to 10, comprising at least two rows of aligned cells and an empty space between two rows, this empty space constituting a channel (17) for natural or forced circulation of a fluid.

12. The assembly of claim 11, comprising at least two channels for natural or forced circulation of a fluid.

13. The assembly of claim 11 or 12, comprising at least three rows of cells, and at least one bead defines a non-rectilinear channel extending in two or three dimensions of space, for circulation of fluid.

14. The assembly according to one of claims 8 to 13, wherein a fluid circulation in a space between the beads Ci and Ci + n with n ≥ 1 takes place in counter-flow to a circulation of fluid in a space between the beads Ci and Ci-p, with p ≥ 1.

15. The assembly according to one of claims 8 to 14, further comprising means (9-1, 9-2, 10) to improve heat exchange, these means being for example selected from the group consisting of plenums, heat sinks, separator plates, heat exchangers, heat pipes and structural parts.

16. The assembly according to claim 15, wherein the means to improve heat exchange are embedded at least partially in a same material as that used to make the bead.

17. The assembly according to one of claims 8 to 16, wherein at least one space between adjacent cells is completely filled with a single deposit of a structuring material.

18. The assembly according to one of claims 8 to 17, wherein a material in contact with the cells located at the periphery of the assembly has a different density to that of material in contact with cells not located at the periphery of the assembly.

19. The assembly of claim 18, wherein a material in contact with the cells located at the periphery of the assembly has a density greater than that of a material in contact with cells which are not located at the periphery of the assembly.
